# EUROPÄISCHE PATENTSCHRIFT

(11) **EP 2 574 454 B1**
(45) Veröffentlichungstag und Bekanntmachung des Hinweises auf die Patenterteilung: **27.08.2014**
(21) Anmeldenummer: 12172575.8
(22) Anmeldetag: 19.06.2012
(51) Int. Cl.: B32B 17/10, C03C 27/12, B60S 1/08, H01Q 1/12, H05B 3/84

(54) **Fensterscheibe mit einer gedruckten Struktur für ein Kraftfahrzeug**
Window pane with a printed structure for a motor vehicle
Vitre avec une structure imprimée pour un véhicule automobile

(30) Priorität: 29.09.2011 DE 102011083665
(43) Veröffentlichungstag der Anmeldung: 03.04.2013
(73) Patentinhaber: Bayerische Motoren Werke Aktiengesellschaft, 80809 München (DE)
(72) Erfinder: Pinsker, Martin, Dr., 84079 Bruckberg (DE); Eilez, Alexander, 81371 München (DE)

(56) Entgegenhaltungen:
- WO-A1-2010/063320
- DE-A1-102009 053 465
- JP-A- 2004 169 435
- JP-A- 2010 120 415
- US-A1- 2006 275 599
- US-A1- 2010 096 647
- US-A1- 2010 179 725
- US-A1- 2010 220 019

## Beschreibung

Die Erfindung betrifft eine Fensterscheibe mit einer gedruckten Struktur für ein Kraftfahrzeug, mit den im Oberbegriff des Patentanspruches 1 angegebenen Merkmalen.

Eine derartige Fensterscheibe ist in der DE 101 14 769 A1 mit gedruckten Heizfeldern versehen, die für eine Antennenanlage genutzt werden. Hierfür weist die Antennenanlage auf die Fensterscheibe aufgebrachte Leiterstrukturen und wenigstens einen Feldeffekttransistor auf. Die Leiter sollen einen geringen Oberflächenwiderstand aufweisen und sind hierfür als leitende Flächen ausgebildet, die einen Blick durch die Fensterscheibe stören dürften. Die Fensterscheibe dürfte deshalb lediglich als Heckscheibe oder Seitenscheibe eines Kraftfahrzeugs verwendbar sein.

Der Erfindung liegt die Aufgabe zu Grunde, eine Fensterscheibe mit einer gedruckten Struktur für ein Kraftfahrzeug mit den Merkmalen im Oberbegriff des Patentanspruches 1 anzugeben, die vielseitiger und auch an der Frontscheibe eines Kraftfahrzeugs verwendbar ist und wenigstens eine nicht oder kaum sichtbare elektronische Struktur und/oder wenigstens ein nicht oder kaum sichtbares elektronisches Bauteil aufweist.

Diese Aufgabe ist durch die Merkmale im Patentanspruch 1 gelöst. Vorteilhafte Ausgestaltungen der Erfindung sind den Unteransprüchen entnehmbar.

Die Fensterscheibe mit einer gedruckten Struktur für ein Kraftfahrzeug ist eine Fensterverbundglasscheibe, die wenigstens eine Glasscheibe und wenigstens eine weitere Glasscheibe oder Kunststoffscheibe aufweist Zumindest zwischen zwei Glasschreiben oder einer Glasscheibe und der Kunststoffscheibe ist direkt oder mittelbar zumindest eine im Wesentlichen lichtdurchlässige Zwischenschicht angeordnet. Entweder auf einer der Zwischenschicht zugewandten Seite zumindest einer Glasscheibe und/oder der Kunststoffscheibe und/oder auf wenigstens eine Seite der Zwischenschicht ist zumindest bereichsweise eine gedruckte elektronische Struktur und/oder wenigstens ein gedrucktes elektronisches Bauteil aufgebracht. Die Fensterscheibe kann beispielsweise eine Frontscheibe oder Heckscheibe oder Seitenscheibe oder ein Glasdeckel oder ein Glasdach jeweils eines Kraftfahrzeugs sein. Die gedruckten Strukturen können beispielsweise im Siebdruck oder Offsetdruck so fein ausgebildet sein, dass sie im Blickfeld eines Fahrgastes, beispielsweise des Fahrers des Kraftfahrzeugs angeordnet sein können, ohne den Blick des Fahrgastes oder Fahrers aus dem Kraftfahrzeug wesentlich zu stören. Die gedruckten Strukturen können mehrlagige elektronische Strukturen mit elektronischen Bauteilen oder für elektronische Bauteile sein. Die mehrlagig gedruckten elektronischen Strukturen können an zumindest einer Kreuzungs- oder Überlagerungsstelle elektrisch miteinander verbunden oder elektrisch voneinander isoliert sein. Die gedruckten Strukturen können elektronische Strukturen mit elektronischen Bauteilen und/oder jeweils wenigstens ein Heizfeld und/oder eine Antenne und/oder einen Sensor und/- oder ein Bedienfeld und/oder ein Designelement und/oder eine Elektronik für wenigstens ein elektronisch ansteuerbares Bauteil bilden. Die Zwischenschicht ist beispielsweise selbsthaftend oder -klebend ausgebildet und mit zumindest einer Glasscheibe im Wesentlichen direkt verbunden. Ebenso kann die Zwischenschicht zumindest auf einer Seite über eine zumindest weitgehend lichtdurchlässige Haftschicht mit der zugewandten Seite einer Glasscheibe verbunden sein. Die Zwischenschicht kann durch eine Einzelschicht oder mehrere Schichten, beispielsweise durch eine ein- oder mehrlagige Folie gebildet sein. Beispielsweise kann eine bedruckbare Schicht aus PET (Polyethylen) die Zwischenschicht bilden. Die Haftschicht kann beispielsweise eine nicht bedruckbare Schicht beispielsweise aus PVB (Polyvinylbutyral) sein.

Sechs Ausführungsbeispiele der Erfindung werden anhand einer Zeichnung näher erläutert. Es zeigen
- Fig. 1a: eine gemäß einem ersten Ausführungsbeispiel in einem vereinfachten Querschnitt dargestellte Fensterverbundglasscheibe mit einer zwischen zwei Glasscheiben angeordneten lichtdurchlässigen Zwischenschicht und gedruckten elektronischen Strukturen auf einer der Zwischenschicht zugewandten Seite einer Glasscheibe,
- Fig. 1b eine Fig. 1a: entsprechende Ansicht eines zweiten Ausführungsbeispiels mit gedruckten elektronischen Strukturen auf einer Seite der Zwischenschicht,
- Fig. 2a: eine gemäß einem dritten Ausführungsbeispiel in einem vereinfachten Querschnitt dargestellte Fensterverbundglasscheibe mit einer zwischen zwei Glasscheiben angeordneten lichtdurchlässigen Zwischenschicht, die durch eine mehrlagige lichtdurchlässige Folie gebildet ist, mit gedruckten elektronischen Strukturen auf einer der Zwischenschicht zugewandten Seite einer Glasscheibe,
- Fig. 2b: eine Fig. 2a entsprechende Ansicht eines vierten Ausführungsbeispiels mit gedruckten elektronischen Strukturen auf einer Seite der mehrlagigen Zwischenschicht, die an eine Glasscheibe angrenzt,
- Fig. 3a: eine gemäß einem fünften Ausführungsbeispiel in einem vereinfachten Querschnitt dargestellte Fensterverbundglasscheibe mit einer zwischen zwei Glasscheiben angeordneten lichtdurchlässigen Zwischenschicht, die jeweils über eine nicht bedruckbare lichtdurchlässige Haftschicht mit den Glasscheiben verbunden ist, mit gedruckten elektronischen Strukturen auf einer der Zwischenschicht zugewandten Seite einer Glasscheibe, und
- Fig. 3b: eine Fig. 3a entsprechende Ansicht eines sechsten Ausführungsbeispiels mit gedruckten elektronischen Strukturen auf einer Seite der Zwischenschicht.

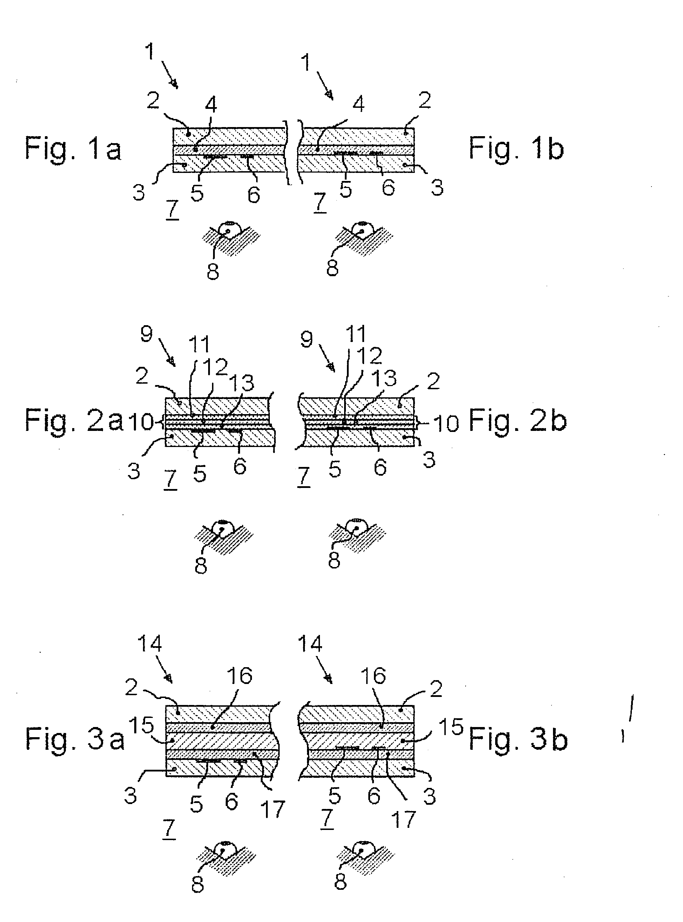

In Fig. 1a ist eine Fensterscheibe 1 für ein Kraftfahrzeug dargestellt, die eine die vordere Windschutzscheibe des Kraftfahrzeugs bildende Fensterverbundglasscheibe ist, die zwei Glasscheiben 2, 3 aufweist, zwischen denen eine im Wesentlichen lichtdurchlässige Zwischenschicht 4 angeordnet ist. Beispielsweise durch Siebdruck oder Offsetdruck sind zumindest bereichsweise gedruckte elektronische Strukturen 5, 6 auf der Seite der an den Fahrgastraum des Kraftfahrzeugs angrenzenden Glasscheibe 3 der Fensterscheibe 1 aufgebracht, die der Zwischenschicht 4 zugewandt ist. Die gedruckten elektronischen Strukturen 5, 6 sind so dünn aufgebracht, dass sie für einen im Fahrgastraum 7 des Kraftfahrzeugs befindlichen Betrachter 8, der durch die Fensterscheibe 1 die Umgebung des Kraftfahrzeugs betrachtet, nicht oder nicht wesentlich störend sind.

Die gedruckten elektronischen Strukturen 5, 6 erscheinen in Fig. 1a in Vertiefungen der Glasscheibe 3 angeordnet. Tatsächlich sind die gedruckten elektronischen Strukturen 5, 6 nicht in Vertiefungen sondern auf die Oberfläche der Glasscheibe 3 aufgebracht und müssten deshalb geringe Erhebungen auf der Glasscheibe 3 bilden.

Durch die in der Glasscheibe 2 versenkt dargestellten gedruckten elektronischen Strukturen 5, 6 soll optisch sofort erkennbar sein, dass die gedruckten elektronischen Strukturen der Glasscheibe 3 zugeordnet sind.

Analoges gilt für die später nachfolgenden Ausführungsbeispiele, bei denen elektronische Strukturen auf eine betreffende Glasscheibe oder auf eine Zwischenschicht aufgebracht, jedoch in der Glasscheibe bzw. Zwischenschicht versenkt dargestellt sind.

Bei dem ersten Ausführungsbeispiel gemäß Fig. 1a ist die Zwischenschicht 4 eine lichtdurchlässige Einzelschicht, die nicht selbsthaftend oder -klebend ausgebildet und beispielsweise jeweils unter Verwendung eines Klebers mit den beiden Glasscheiben 2, 3 verbunden ist. Die lichtdurchlässige Zwischenschicht ist bei der vorliegenden Ausführung eine Schicht aus PET (Polyethylen), die bedruckbar ist.

Die gedruckten Strukturen 5, 6 können elektronische Strukturen mit elektronischen Bauteilen und/oder jeweils wenigstens eine Heizfeld und/oder eine Antenne und/oder einen Sensor und/oder ein Bedienfeld und/oder ein Designelement und/oder eine Elektronik für wenigstens ein elektronisch ansteuerbares Bauteil bilden. Ebenso ist es möglich, dass zusätzlich oder an Stelle der gedruckten Strukturen 5, 6 nicht dargestellte gedruckte elektronische Bauteile verwendet sind.

Die gedruckten Strukturen 5, 6 können mehrlagige elektronische Strukturen mit elektronischen Bauteilen oder für elektronische Bauteile bilden, die mehrlagig gedruckt sein können. In diesem Fall können die elektronischen Strukturen an zumindest einer Kreuzungs- oder Überlagerungsstelle elektrisch miteinander verbunden oder elektrisch voneinander isoliert sein.

Ein zweites, in Fig. 1b vereinfacht dargestelltes Ausführungsbeispiel ist ähnlich wie das erste Ausführungsbeispiel gemäß Fig. 1a gebildet und weist ebenfalls beispielsweise durch Siebdruck oder Offsetdruck gedruckte elektronische Strukturen 5, 6 auf, die bei dem zweiten Ausführungsbeispiel auf die dem Betrachter 8 zugewandte Seite der Zwischenschicht 4 aufgebracht sind. Die zwischen dem ersten und zweiten Ausführungsbeispiel vergleichbaren Lagen bzw. Schichten der Fensterverbundglasscheibe 1 sind zur Vermeidung einer wiederholten Beschreibung mit gleichen Bezugszahlen versehen.

Ein drittes Ausführungsbeispiel ist in Fig. 2a in einem vereinfachten Querschnitt dargestellt, bei dem eine vordere Fensterscheibe 9 eines Kraftfahrzeugs eine Fensterverbundglasscheibe ist, die eine zwischen zwei Glasscheiben 2, 3 angeordnete lichtdurchlässige Zwischenschicht 10 aufweist, die durch eine drei Lagen 11, 12, 13 aufweisende lichtdurchlässige Folie gebildet ist. Auf die der Zwischenschicht 10 zugewandten Seite der an den Fahrgastraum 7 angrenzenden Glasscheibe 3 sind beispielsweise durch einen Siebdruck oder Offsetdruck gedruckte Strukturen 5, 6 aufgebracht, die beispielsweise die zu dem ersten Ausführungsbeispiel angegebenen Strukturen, beispielsweise elektronische Strukturen sind.

Die Zwischenschicht 9 ist zumindest an ihren den Glasscheiben 2, 3 zugewandten Oberflächen selbsthaftend oder -klebend ausgebildet und mit den Glasscheiben 2, 3 im Wesentlichen direkt verbunden.

Auch bei diesem Ausführungsbeispiel sind die gedruckten elektronischen Strukturen beispielsweise durch Siebdruck oder Offsetdruck so fein ausgebildet, dass sie im Blickfeld eines Fahrgastes 8, beispielsweise des Fahrers des Kraftfahrzeugs angeordnet sein können, ohne den Blick des Fahrgastes 8 oder Fahrers aus dem Kraftfahrzeug wesentlich zu stören.

Die beispielsweise mit dem ersten Ausführungsbeispiel gemäß Fig. 1 a überein stimmenden oder vergleichbaren Lagen bzw. Schichten der Fensterscheibe 9 des dritten Ausführungsbeispiels gemäß Fig. 2a weisen zur Vermeidung einer wiederholten Beschreibung eine gleiche Bezugszahl auf.

Ein viertes, in Fig. 2b vereinfacht dargestelltes Ausführungsbeispiel ist ähnlich wie das dritte Ausführungsbeispiel gemäß Fig. 2a gebildet und weist ebenfalls beispielsweise durch Siebdruck oder Offsetdruck gedruckte elektronische Strukturen 5, 6 auf, die auf der Seite der durch drei Lagen 11, 12, 13 gebildeten Zwischenschicht 10 aufgebracht sind, die dem Betrachter 8 zugewandt ist. Die zwischen den Ausführungsbeispielen vergleichbaren Lagen bzw. Schichten der Fensterverbundglasscheibe 1 sind zur Vermeidung einer wiederholten Beschreibung mit gleichen Bezugszahlen versehen.

Ein fünftes Ausführungsbeispiel ist in Fig. 3a in einem vereinfachten Querschnitt dargestellt, bei dem eine vordere Fensterscheibe 14 eines Kraftfahrzeugs eine Fensterverbundglasscheibe ist, die eine zwischen zwei Glasscheiben 2, 3 angeordnete lichtdurchlässige Zwischenschicht 15 aufweist, die an ihren beiden gegenüber angeordneten größeren Oberflächen jeweils über eine zumindest weitgehend lichtdurchlässige Haftschicht 16 bzw. 17 mit der zugewandten Seite einer Glasscheibe 2 bzw. 3 verbunden ist. Bei dem Ausführungsbeispiel ist jede Haftschicht 16, 17 eine nicht bedruckbare Schicht beispielsweise aus PVB (Polyvinylbutyral). Auf die der Zwischenschicht 15 zugewandten Seite der an den Fahrgastraum 7 angrenzenden Glasscheibe 3 sind beispielsweise durch einen Siebdruck oder Offsetdruck gedruckte Strukturen 5, 6 aufgebracht, die beispielsweise die zu dem ersten Ausführungsbeispiel angegebenen Strukturen, beispielsweise elektronische Strukturen sind.

Ein sechstes, in Fig. 3b vereinfacht dargestelltes Ausführungsbeispiel sieht an einem Kraftfahrzeug eine vordere Fensterscheibe vor, die ähnlich wie das fünfte Ausführungsbeispiel gemäß Fig. 3a als Verbundglasscheibe ausgebildet ist, die beispielsweise durch Siebdruck oder Offsetdruck gedruckte elektronische Strukturen 5, 6 aufweist, die auf der Seite der Zwischenschicht 15 aufgebracht sind, die dem Betrachter 8 im Fahrgastraum zugewandt ist. Die zwischen den Ausführungsbeispielen vergleichbaren Lagen bzw. Schichten der Fensterverbundglasscheibe 1 sind zur Vermeidung einer wiederholten Beschreibung mit gleichen Bezugszahlen versehen. Die gedruckten elektronischen Strukturen 5, 6 sind beispielsweise wie bei den anderen Ausführungsbeispielen durch Siebdruck oder Offsetdruck so fein ausgebildet, dass sie im Blickfeld eines Fahrgastes, beispielsweise des Fahrers des Kraftfahrzeugs angeordnet sein können, ohne den Blick des Fahrgastes oder Fahrers aus dem Kraftfahrzeug wesentlich zu stören. Die gedruckten Strukturen können wie bei den anderen Ausführungsbeispielen einlagig oder mehrlagig ausgebildet sein und beispielsweise die zum ersten Ausbildungsbeispiel angegebenen Strukturen, beispielsweise elektronische Strukturen mit elektronischen Bauteilen oder für elektronische Bauteile bilden. Beispielsweise mehrlagig gedruckte elektronische Strukturen können an zumindest einer Kreuzungs- oder Überlagerungsstelle elektrisch miteinander verbunden oder elektrisch voneinander isoliert sein.

Die Erfindung kann selbstverständlich von den sechs Ausführungsbeispielen abweichen ausgeführt werden. Die Fensterscheibe ist eine Fensterverbundglasscheibe, die wenigstens zwei Glasscheiben aufweist, zwischen denen direkt oder mittelbar zumindest eine im Wesentlichen lichtdurchlässige Zwischenschicht angeordnet ist. Entweder auf einer der Zwischenschicht zugewandten Seite wenigstens einer Glasscheibe und/oder auf wenigstens eine Seite der Zwischenschicht ist zumindest bereichsweise eine gedruckte elektronische Struktur oder wenigstens ein gedrucktes elektronisches Bauteil aufgebracht. Die gedruckte Struktur kann eine beliebige Struktur beispielsweise mit gedruckten elektronischen Bauteilen und/oder mit einem Heizfeld und/oder einer Antenne und/oder einem Sensor und/oder einem Bedienfeld und/oder einem Designelement und/- oder einer Elektronik für wenigstens ein elektronisch ansteuerbares Bauteil bilden, die ebenfalls gedruckte elektronische Strukturen oder gedruckte elektronische Bauteile sind. Die Zwischenschicht kann selbsthaftend oder -klebend ausgebildet und mit zumindest einer Glasscheibe im Wesentlichen direkt verbunden sein. Die Zwischenschicht kann zumindest auf einer Seite über eine zumindest weitgehend lichtdurchlässige Haftschicht mit der zugewandten Seite einer Glasscheibe verbunden sein. Die Zwischenschicht kann durch eine Einzelschicht oder mehrere Schichten, beispielsweise durch eine ein- oder mehrlagige Folie gebildet sein. Die Zwischenschicht kann eine nicht bedruckbare Schicht oder eine bedruckbare Schicht beispielsweise aus PET (Polyethylen) sein. Die Haftschicht kann eine bedruckbare oder nicht bedruckbare Schicht beispielsweise aus PVB (Polyvinylbutyral) sein. Die Fensterscheibe kann eine beliebige Fensterscheibe eines Kraftfahrzeugs beispielsweise eine Frontscheibe oder Heckscheibe oder Seitenscheibe oder ein Glasdeckel oder ein Glasdach jeweils eines Kraftfahrzeugs sein. Die gedruckten Strukturen können beliebig, beispielsweise durch Siebdruck oder Offsetdruck so fein ausgebildet sein, dass sie im Blickfeld eines Fahrgastes, beispielsweise des Fahrers des Kraftfahrzeugs angeordnet sein können, ohne den Blick des Fahrgastes oder Fahrers aus dem Kraftfahrzeug wesentlich zu stören. Die gedruckten Strukturen können einlagige oder mehrlagige Strukturen, beispielsweise elektronische Strukturen mit gedruckten elektronischen Bauteilen oder für elektronische Bauteile sein. Mehrlagig gedruckte elektronische Strukturen können an zumindest einer Kreuzungs- oder Überlagerungsstelle elektrisch miteinander verbunden oder elektrisch voneinander isoliert sein.

Auf Fensterscheiben von Kraftfahrzeugen kommen vermehrt leitfähige Strukturen, z. B. für Heizfelder oder Antennen sowie aufgeklebte Sensoren, z.B. Regensensoren, Beschlagsensoren oder Kamerasysteme, zum Einsatz. Die Sensoren müssen häufig im Sichtfeld des Fahrers oder in der Nähe dieses Sichtfeldes angebracht werden. Der Stand der Technik bedingt Strukturbreiten der leitfähigen Strukturen, die größer als 0,3 mm sind. Sensorgrößen betragen mehrere Zentimeter. Dies stört die Wahrnehmung bei der Beobachtung des Straßenverkehrs und ist mit Komforteinbußen durch eine Sichtfeldeinschränkung, Reflexion des Umgebungslichts oder einer Verzerrung in der Fensterscheibe auf Grund einer inhomogenen Aufheizung der Fensterscheibe verbunden. Für viele der heute auf Fensterscheiben aufgebrachten Funktionen müssen separate Sensoren zum Einsatz kommen, weil z. B. die Anforderungen an den Anbringungsort unterschiedlich sind oder eine Funktion, z. B. eine Kamera, das Vorhandensein einer anderen Funktion , z. B. eine Heizfeld im Bereich der Kamera, erfordert oder ausschließt (z. B. Ausschluss Beschlagsensor/Heizfeld). Es existieren heute Drucktechniken, die es erlauben, sehr feine und somit nahezu unsichtbare Strukturen beispielsweise bis 0,01 mm Breite zu drucken. Hierbei können auch verschiedene Materialien mehrlagig aufgedruckt und somit z. B. elektronische Bauteile in Drucktechnik erstellt werden. Diese Technik kommt zum Beispiel bei der Herstellung von RFID-Labeln zum Einsatz. Bei Fensterscheiben von Kraftfahrzeugen ermöglicht diese Technologie die Integration verschiedenster Funktionen und Sensoren in eine gedruckte Struktur. Aufgrund der geringen Wahrnehmbarkeit der gedruckten Strukturen können Sensoren, Heizfelder usw. auch im direkten Sichtfeld eines Fahrers eines Kraftfahrzeugs auf der vorderen Fensterscheibe des Kraftfahrzeugs angebracht sein. Bei einem mehrlagigen Druck auf der Fensterscheibe kann durch eine entsprechende Ausrichtung der Lagen des Drucks zueinander eine Reduktion der Lichtdurchlässigkeit vermieden werden, so dass die gesetzlichen Vorgaben einzuhalten sind. Die Drucktechnik ist hinreichend flexibel, um fahrzeugspezifische oder sonderausstattungsspezifische Druckstrukturen kostengünstig herstellen zu können. Eine Bedruckung kann direkt auf Glas oder großtechnisch günstiger auf PET-Folie erfolgen, die mit heute verfügbaren Technologien in eine Fensterverbundglasscheibe einlaminiert wird. Leiterstrukturen, Elektroniken usw. können bei der vorgeschlagenen Drucktechnik, beispielsweise im Siebdruck oder Offsetdruck, auch in mehreren Lagen übereinander gedruckt und bei Einsatz einer bedruckten Folie zweiseitig gedruckt werden, so dass unabhängige Funktionen (Heizfelder, Sensoren, Antennen, ...) in voneinander unabhängigen Strukturen aufgebracht werden können. Abhängig von der Packungsdichte bzw. der Auftragsmenge beim Drucken können die Schichten auch sichtbar gemacht werden. Die Spanne reicht von vollständig durchsichtig (nicht oder nur mit unsichtbaren Strukturen bedruckt) bis vollkommen undurchsichtig (vollständig bedruckt), wobei auch alle teilweise lichtdurchlässigen Zwischenstadien herstellbar sind. Dies ermöglicht die Integration von Designelementen ebenso wie von funktionalen Elementen wie z. B. Blendschutz (Graukeil). Bei entsprechender Auswahl des aufgedruckten Materials können die Design- oder Funktionselemente elektrisch kontaktiert und zum Stromtransport verwendet werden. Beispielsweise eine Folie oder Glas können vor der Bedruckung auch mit funktionalen Beschichtungen, z. B. IR-reflektierenden Schichten versehen werden, was die funktionale Integrationsdichte weiter erhöht. Sind diese Schichten leitfähig, können sie zur Energie- und Wärmedissipation zusätzlich genutzt werden.

Mit der Erfindung können unsichtbare Leiterstrukturen/Elektroniken im Sichtfeld des Fahrers eines Kraftfahrzeugs angeordnet sein, die den Komfort insbesondere bei den Technologien erhöhen, die nur im direkten Sichtfeld des Fahrers angebracht sein können (z.B. Heizfelder, Antennen), da eventuelle visuelle Störungen eliminiert oder zumindest reduziert sind. Die Anbringung von Sensorstrukturen (z. B. kapazitiver Regensensor, Beschlagsensor) im direkten Sichtfeld des Fahrers erhöht die Erkennungsquote von Sichtbeeinträchtigungen, weil die Sichtbeeinträchtigung dort erkannt wird, wo sie für den Fahrer relevant ist. Dies erhöht die Zuverlässigkeit der Systeme, für die der Sensor die Regelungssignale erzeugt. Bezüglich der Heizfelder ermöglicht die Drucktechnologie den kostengünstigen Einsatz mehrerer Heizfelder, so dass z. B, primäre Sichtfelder oder Sensorfelder schnell, auf Grund der reduzierten Fläche aber trotzdem energieeffizient, beheizbar sind. Je nach verfügbarer Batteriekapazität können Heizfelder mit niedriger Priorität vorzeitig abgeschaltet werden, ohne die primären Sichtfelder zu beeinträchtigen. Dies ermöglicht neue Konzepte der Klimatisierungs- und Energiebordnetz-Strategie. Die Kontaktierung von Sensorstrukturen und Heizfeldern kann direkt über die gedruckte Struktur erfolgen, was die Kosten und den Bauraumbedarf reduziert. Auch die Integration eines Teils des Fahrzeug-Kabelbaums in die gedruckte Struktur ist möglich, was die Kosten und den Bauraumbedarf weiter reduziert. Bei Einsatz einer bedruckten Folie (z.B. PET-Folie) liegt ein kostengünstig herstellbares Vorprodukt vor, das die Komplexität des Fertigungsprozesses der Fensterscheibe reduziert. Die Möglichkeit des Drucks elektronischer Strukturen erschließt Anwendungsbereiche wie z.B. eine Integration von Leuchtelementen (z.B. hochgesetzte Bremsleuchte) oder Sensor-Elektroniken in eine Fensterscheibe eines Kraftfahrzeugs.

## Patentansprüche

1. Fensterscheibe mit einer gedruckten Struktur für ein Kraftfahrzeug, wobei die Fensterscheibe (1, 9, 14) eine Fensterverbundglasscheibe ist, die wenigstens eine Glasscheibe (2 bzw. 3) und wenigstens eine weitere Glasscheibe (3 bzw. 2) oder Kunststoffscheibe aufweist, wobei zumindest zwischen zwei Glasscheiben oder einer Glasscheibe und der Kunststoffscheibe direkt oder mittelbar zumindest eine im Wesentlichen lichtdurchlässige Zwischenschicht (4, 10, 15) angeordnet ist, und entweder auf einer der Zwischenschicht (4, 10, 15) zugewandten Seite zumindest einer Glasscheibe (6) und/oder der Kunststoffscheibe und/oder auf wenigstens eine Seite der Zwischenschicht (4, 10, 15) zumindest bereichsweise eine gedruckte elektronische Struktur (5, 6) und/oder wenigstens ein gedrucktes elektronisches Bauteil aufgebracht ist, **dadurch gekennzeichnet, dass** die gedruckten Strukturen (5, 6) mehrlagige elektronische Strukturen mit elektronischen Bauteilen oder für elektronische Bauteile sind.

2. Fensterscheibe nach Anspruch 1, **dadurch gekennzeichnet, dass** die Zwischenschicht (4) selbsthaftend oder -klebend ausgebildet und mit zumindest einer Glasscheibe (2, 3) im Wesentlichen direkt verbunden ist.

3. Fensterscheibe nach Anspruch 1 oder 2, **dadurch gekennzeichnet, dass** die Zwischenschicht (15) zumindest auf einer Seite über eine zumindest weitgehend lichtdurchlässige Haftschicht (16, 17) mit der zugewandten Seite einer Glasscheibe (2, 3) verbunden ist.

4. Fensterscheibe nach einem der Ansprüche 1 bis 3, **dadurch** gekenntzeichnet, **dass** die Zwischenschicht (4, 10, 15) durch eine Einzelschicht oder mehrere Schichten, beispielsweise durch eine ein- oder mehrlagige Folie (10) gebildet ist.

5. Fensterscheibe nach einem der Ansprüche 1 bis 4, **dadurch** gekenntzeichnet, **dass** die Zwischenschicht (4, 15) eine bedruckbare Schicht beispielsweise aus PET ist.

6. Fensterscheibe nach einem der Ansprüche 3 bis 5, **dadurch gekennzeichnet, dass** die Haftschicht (16, 17) eine nicht bedruckbare Schicht beispielsweise aus PVB (Polyvinylbutyral) ist.

7. Fensterscheibe nach einem der Ansprüche 1 bis 6, **dadurch gekennzeichnet, dass** die gedruckten Strukturen (5, 6) elektronische Strukturen mit elektronischen Bauteilen und/oder jeweils wenigstens ein Heizfeld und/oder eine Antenne und/oder einen Sensor und/oder ein Bedienfeld und/oder ein Designelement und/oder eine Elektronik für wenigstens ein elektronisch ansteuerbares Bauteil bilden.

8. Fensterscheibe nach einem der Ansprüche 1 bis 7, **dadurch gekennzeichnet, dass** die Fensterscheibe (1, 9, 14) eine Frontscheibe oder Heckscheibe oder Seitenscheibe oder ein Glasdeckel oder ein Glasdach jeweils eines Kraftfahrzeugs ist.

9. Fensterscheibe nach einem der Ansprüche 1 bis 8, **dadurch gekennzeichnet, dass** die gedruckten Strukturen (5, 6) beispielsweise durch einen Siebdruck oder Offsetdruck so fein ausgebildet sind, dass sie im Blickfeld eines Fahrgastes, beispielsweise des Fahrers des Kraftfahrzeugs angeordnet sein können, ohne den Blick des Fahrgastes oder Fahrers aus dem Kraftfahrzeug wesentlich zu stören.

10. Fensterscheibe nach einem der Ansprüche 7 bis 9, **dadurch gekennzeichnet, dass** die mehrlagig gedruckten elektronischen Strukturen (5, 6) an zumindest einer Kreuzungs- oder Überlagerungsstelle elektrisch miteinander verbunden oder elektrisch voneinander isoliert sind.

## Claims

1. A window pane with a printed structure for a motor vehicle, wherein the pane (1, 9, 14) is a laminated glass pane comprising at least one glass pane (2 or 3) and at least one additional glass pane (3 or 2) or plastics material pane, wherein a substantially translucent intermediate layer (4, 10, 15) is disposed at least between two glass panes or one glass pane and the plastics material pane, directly or indirectly, and a printed electronic structure (6) and/or at least one printed electronic component is disposed at least in places, either on the side, facing the intermediate layer (4, 10, 15) of at least one glass pane (6) and/or the plastics material pane and/or on at least one side of the intermediate layer (4, 10, 15), **characterised in that** the printed structures (5, 6) are multi-layer electronic structures with electronic components or four electronic components.

2. A window pane according to claim 1, **characterised in that** the intermediate layer (4) is self-adhesive or self-sticking and connected substantially directly to at least one glass pane (2, 3).

3. A window pane according to claim 1 or claim 2, **characterised in that** the intermediate layer (15) is connected to the facing side of a glass pane (2, 3) at least on one side via an at least substantially translucent adhesive layer (16, 17).

4. A window pane according to any of claims 1 to 3, **characterised in that** the intermediate layer (4, 10, 15) is in the form of a single layer or a number of layers, e.g. a one or multi-layer foil (10).

5. A window pane according to any of claims 1 to 4, **characterised in that** the intermediate layer (4, 15) is a printed layer, e.g. of PET.

6. A window pane according to any of claims 3 to 5, **characterised in that** the adhesive layer (16, 17) is a non-printable layer of PVB (polyvinyl butyral).

7. A window pane according to any of claims 1 to 6, **characterised in that** the printed structures (5, 6) are electronic structures with electronic components and/or form at least one heating array and/or one antenna and/or one sensor and/or a control panel and/or a design element and/or an electronic unit for at least one electronically actuated component.

8. A window pane according to any of claims 1 to 7, **characterised in that** the pane (1, 9, 14) is a front window or back window or side window or a glass cover or glass roof, in each case of a vehicle.

9. A window pane according to any of claims 1 to 8, **characterised in that** the printed structures are made so fine, e.g. by silk screen printing or opposite printing, that they can be disposed in the field of vision of an occupant, e.g. the vehicle driver, without substantially interfering with the view of the occupant or driver from the vehicle.

10. A window pane according to any of claims 7 to 9, **characterised in that** the multi-layer printed electronic structures (5, 6) are electrically connected to or insulated from one another at at least one intersection or superposition point.

## Revendications

1. Vitre de fenêtre ayant une structure imprimée pour un véhicule automobile, dans laquelle la vitre (1, 9, 14) est une vitre en verre composite qui comporte au moins une vitre en verre (2 ou 3) et au moins une autre vitre en verre (3 ou 2) ou une vitre en matériau synthétique, au moins entre deux vitres en verre ou entre une vitre en verre et la vitre en matériau synthétique est positionnée directement ou indirectement au moins une couche intermédiaire (4, 10, 15) essentiellement perméable à la lumière et, soit sur une face tournée vers la couche intermédiaire (4, 10, 15) d'au moins une vitre en verre (6) et/ou de la vitre en matériau synthétique et/ou sur au moins une face de la couche intermédiaire (4, 10, 15) est appliquée au moins par zone une structure électronique imprimée (5, 6) et/ou au moins un élément électronique imprimé,
**caractérisée en ce que**
les structures imprimées (5, 6) sont des structures électroniques multicouches avec des composants électroniques ou pour des composants électroniques.

2. Vitre conforme à la revendication 1,
**caractérisée en ce que**
la couche intermédiaire (4) est auto-adhésive ou autocollante et est reliée à au moins une vitre en verre (2, 3) essentiellement directement.

3. Vitre conforme à la revendication 1 ou 2,
**caractérisée en ce que**
la couche intermédiaire (15) est reliée, au moins sur l'une de ses faces, par l'intermédiaire d'une couche adhésive (16, 17) au moins largement perméable à la lumière avec la face tournée vers celle-ci d'une vitre en verre (2, 3).

4. Vitre conforme à l'une des revendications 1 à 3,
**caractérisée en ce que**
la couche intermédiaire (4, 10, 15) est formée par une seule couche ou par plusieurs couches par exemple par un film (10) mono ou multi-couche(s).

5. Vitre conforme à l'une des revendications 1 à 4,
**caractérisée en ce que**
la couche intermédiaire (4, 15) est une couche imprimable, par exemple en PET.

6. Vitre conforme à l'une des revendications 3 à 5,
**caractérisée en ce que**
la couche adhésive (16, 17) est une couche non imprimable par exemple en PVB (polyvinyl butyral).

7. Vitre conforme à l'une des revendications 1 à 6,
**caractérisée en ce que**
les structures imprimées (5, 6) forment des structures électronique avec des composants électroniques et/ou respectivement au moins un champ de dégivrage, et/ou une antenne et/ou un détecteur et/ou un champ d'actionnement et/ou un élément décoratif et/ou une électronique pour au moins un élément à commande électronique.

8. Vitre conforme à l'une des revendications 1 à 7,
**caractérisée en ce que**
la vitre (1, 9, 14) est une vitre frontale ou une vitre arrière ou une vitre latérale ou une couvercle vitrée ou un toit vitré d'un véhicule respectif.

9. Vitre conforme à l'une des revendications 1 à 8,
**caractérisée en ce que**
les structures imprimées (5, 6) sont par exemple formées par sérigraphie ou impression offset avec une finesse suffisante pour pouvoir être positionnées dans le champ de vision d'un occupant du véhicule par exemple du conducteur du véhicule sans perturber essentiellement la vision de cet occupant du véhicule ou de ce conducteur à l'extérieur du véhicule.

10. Vitre conforme à l'une des revendications 7 à 9,
**caractérisée en ce que**
les structures électroniques à impression multicouches (5, 6) sont reliés électriquement entre elles au moins au niveau d'un emplacement de croisement ou de chevauchement ou sont isolées électriquement les unes des autres.
